# EUROPÄISCHE PATENTANMELDUNG

(11) **EP 1 619 490 A2**
(43) Veröffentlichungstag der Anmeldung: **25.01.2006**
(21) Anmeldenummer: 05013761.1
(22) Anmeldetag: 25.06.2005
(51) Int. Cl.: G01N 15/08, F16L 55/115

(54) **Prüfeinrichtung für Dichtkörper**

(30) Priorität: 20.07.2004 DE 102004035111
(71) Anmelder: Federal-Mogul Sealing Systems Bretten GmbH, 75015 Bretten (DE)
(72) Erfinder: Salameh, Ralf, 75053 Gondelsheim (DE)

(57) **Zusammenfassung**

Einrichtung zur Prüfung der Durchlässigkeit von Flüssigkeiten und/oder Dämpfen durch elastomere Dichtkörper, beinhaltend ein mit einer Ausnehmung versehenes Gefäß zur Aufnahme eines Prüfmediums sowie einen die Ausnehmung verschließenden Deckel, der mittels Schrauben gegenüber dem Gefäß festlegbar ist, wobei der Dichtkörper zwischen gegenüberliegenden Stirnflächen einerseits des Gefäßes und andererseits des Deckels positionierbar, über die Schrauben mit vorgebbarer Spannkraft fixierbar und das durch die verbleibende Materialdicke des Dichtkörpers durch einen Dichtspalt zwischen den Stirnflächen nach außen tretende Prüfmedium messbar ist.

## Beschreibung

Die Erfindung betrifft eine Einrichtung zur Prüfung der Durchlässigkeit von Flüssigkeiten und/oder Dämpfen durch elastomere Dichtkörper.

Aufgrund neuer Gesetzgebungen ist die Permeation von Stoffen durch Dichtsysteme ein wichtiges Thema bei der Entwicklung neuer Dichtkörper. Dies gilt sowohl für alle Abdichtstellen im Motorenbereich, zum Beispiel Kraftstoffpermeation, wie auch bei der Entwicklung neuer Systeme, wie zum Beispiel Brennstoffzellen (Wasserstoffpermeation). Die Permeationsraten werden heute im Bereich der Dichtungstechnik zum großen Teil an Materialproben ermittelt oder es werden komplette Systeme getestet, wie zum Beispiel Tanksysteme. Vielfach können hierbei in einer Messkammer nur einzelne Proben gemessen werden. Da die Permeation ein Vorgang ist, bei dem bezüglich der Aussagekraft der ermittelten Daten über längere Zeit gemessen werden sollte, sind die Vorrichtungen mit einer einzigen Messung lange belegt.

In der VDA-Leitlinie 675245 (Elastomere Bauteile in Kraftfahrzeugen - Prüfverfahren zur Eigenschaftsbestimmung, Durchlässigkeit von Flüssigkeiten und Dämpfen durch Elastomere) wird eine Prüfeinrichtung beschrieben, bei der die Permeation durch Materialproben mit einem einfachen Aufbau (Cup-Test) gemessen wird. Hierbei werden kleine Gefäße mit einem Prüfmedium (z. B. Normalkraftstoffgemisch) gefüllt. Dann wird die als Platte ausgebildete Materialprobe in eine im Gefäß vorgesehene Aussparung eingebracht. Ein dem Gefäß gegenüberliegender Deckel, der mit dem Gefäß verschraubbar ist, weist probenseitig eine Aussparung zur Aufnahme eines Stützsiebes auf, um den inneren Druck auf die Probe abzufangen, sofern bei höheren Temperaturen geprüft wird. Der Deckel ist mit einer Durchgangsöffnung versehen, durch welche das Prüfmedium durchtreten kann. Das Startgewicht des Gefäßes, samt Inhalt, wird festgehalten. Wird die Flüssigkeit oder das Dampf-Luftgemisch durch die Materialprobe austreten, wird sich das Anfangsgewicht verringern. Das fehlende Gewicht entspricht hierbei der durch Permeation entwichenen Menge. Die VDA-Leitlinie setzt sich ausschließlich mit Materialproben auseinander, die eine Materialdicke von 2 +/- 0,1 mm aufweisen, was nicht den realen Einsatzbedingungen des jeweiligen Dichtkörpers entspricht. Die im Gefäß vorgesehene Ausnehmung zur Aufnahme der Materialprobe beträgt 1,5 mm, wobei die Materialprobe um 25 % zusammengedrückt werden soll, so dass die einander gegenüberliegenden plan ausgebildeten Stirnflächen einerseits des Gefäßes und andererseits des Deckels im verspannten Zustand der Materialprobe aufeinander liegen. In Abhängigkeit von der Größe der Durchgangsöffnung im Deckel - die nicht der Realität im Betriebszustand entspricht - tritt nun die Flüssigkeit oder das Dampf-Luftgemisch hindurch, wobei der gemessene Wert ebenfalls nicht auf reale Einbaubedingungen eines Dichtkörpers übertragen werden kann.

Der Erfindung liegt die Aufgabe zugrunde, die im Stand der Technik beschriebene Einrichtung zur Prüfung der Durchlässigkeit von Flüssigkeiten und/oder Dämpfen dahingehend weiter zu bilden, dass ein dem tatsächlichen Anwendungsfall entsprechender Meßwert ermittelbar ist, der der Entwicklung neuer Dichtsysteme, abhängig vom jeweiligen Dichtkonzept, zugrunde gelegt werden kann.

Diese Aufgabe wird gelöst durch eine Einrichtung zur Prüfung der Durchlässigkeit von Flüssigkeiten und/oder Dämpfen durch elastomere Dichtkörper, beinhaltend ein mit einer Ausnehmung versehenes Gefäß zur Aufnahme eines Prüfmediums, sowie einen die Ausnehmung verschließenden Deckel, der mittels Schrauben gegenüber dem Gefäß festlegbar ist, wobei der Dichtkörper zwischen gegenüberliegenden Stirnflächen einerseits des Gefäßes und andererseits des Deckels positionierbar, über die Schrauben mit vorgebbarer Spannkraft fixierbar und das durch die verbleibende Materialdicke des Dichtkörpers durch einen Dichtspalt zwischen den Stirnflächen nach außen tretende Prüfmedium meßbar ist.

Vorteilhafte Weiterbildungen des Erfindungsgegenstandes sind den Unteransprüchen zu entnehmen.

Abweichend vom Stand der Technik gemäß geltender VDA-Leitlinie werden nun nicht irgendwelche Materialproben mit vorbestimmten Dicken eingesetzt, sondern vielmehr tatsächlich zum Einsatz gelangende Dichtkörper zwischen den Stirnflächen des Gefäßes sowie des Deckels verspannt. Es können beliebig ausgebildete Dichtkörper geprüft werden, wobei die zugeordnete Stirnfläche des Gefäßes und/oder des Deckels den jeweiligen Einsatzbedingungen angepaßt wird. Dies betrifft insbesondere die Kontur und die Rauigkeit der jeweiligen Oberfläche.

Auf der Grundlage des genormten Cup-Tests, der nur Materialproben vergleichen kann, können nun durch die erfindungsgemäße Einrichtung unterschiedlichste Dichtkörper (Materialien + Design) verglichen werden. Die Untersuchung erfolgt auch hier auf Grundlage der qualitativen Messung des Gewichtsverlustes des Prüfmediums. Gegenüber dem Stand der Technik wird mit der erfindungsgemäßen Vorrichtung allerdings das reale Dichtkonzept mit allen Einflüssen getestet. Das Entweichen des Prüfmediums muss, wie in der Realität auch, über die Kontaktflächen des Dichtkörpers mit der/den Stirnfläche(n) des Gefäßes/Deckels und die Dichtungsmaterialien selbst erfolgen. Es gibt hierbei die Möglichkeit, bestimmte Dichtspalte zwischen den gegenüberliegenden Stirnflächen einzustellen, was bestimmten realen Toleranzzuständen entspricht.

Der Versuchsaufbau kann unter gewünschten Temperatureinflüssen herbeigeführt werden und zwar durch das Platzieren der Einrichtung in Temperaturschränken. Die Dichtkörper, die in der erfindungsgemäßen Einrichtung verwendet werden, werden - wie bereits angesprochen - auf angepassten Einrichtungen verspannt oder sind speziell dafür zu fertigen. Sofern der Dichtkörper mit Dichtlippen versehen ist, ist es wichtig, dass der Wirkdurchmesser der Dichtlippen bei den verschiedenen Prüfkörpern identisch ist, um die unterschiedlichen Konzepte miteinander vergleichen zu können.

Die Einrichtungen sind vorteilhafterweise aus Aluminium hergestellt, da hier keine Permeation durch die Einrichtung selbst stattfinden kann. Durch die Verwendung unterschiedlicher Materialien für das Gefäß (z. B. Kunststoff statt Aluminium) kann auch der Einfluß der Materialien der Systemkomponenten abgeschätzt werden.

Folgende Vorteile gehen mit der erfindungsgemäßen Einrichtung einher:
sehr einfacher Versuchsaufbau, dadurch kann auch in vielen Einrichtungen vergleichend parallel gemessen werden
die Einrichtung kann mit einfachen Mitteln hohen oder tiefen Temperaturen ausgesetzt werden
es können sogenannte Temperaturprofile gefahren werden
Modifikation des Dichtspaltes um unterschiedliche Verpressungszustände des Dichtkörpers realisieren zu können (Simulation der Systemtoleranzen)
Modifikation der Stirnflächen von Gefäß und Deckel (Oberflächenstruktur und Rauheit)
Modifikation der Einrichtungsmaterialien zur Ermittlung weiterer Systemeinflüsse.

Der Erfindungsgegenstand ist anhand eines Ausführungsbeispieles in der Zeichnung dargestellt und wird wie folgt beschrieben. Es zeigen
- Figuren 1a bis 1c: unterschiedlich ausgebildete Elastomer-Dichtkörper
- Figuren 2a bis 2c: Prüfeinrichtung mit darin eingebrachten Dichtkörpern gem. Figuren 1a bis 1c

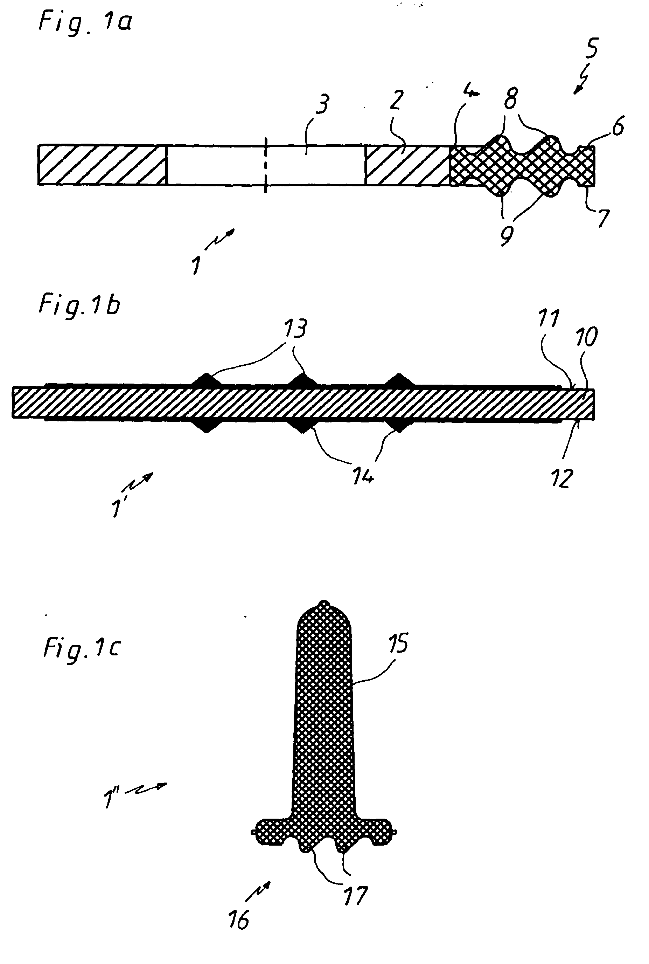

Die Figuren 1a bis 1c zeigen unterschiedlich ausgebildete Dichtkörper 1,1 ',1".

Der Dichtkörper 1 wird gebildet durch eine Flachdichtung mit einem metallischen Grundkörper 2, der mit einer Ausnehmung 3 versehen ist, die als Durchgangsloch für Schraubenbolzen dient.

Der Dichtkörper 1 ist in diesem Beispiel im Querschnitt zylindrisch ausgebildet, wobei im Bereich der äußeren Umfangsfläche 4 des Grundkörpers 2 ein Dichtelement 5 angespritzt ist. Das Dichtelement verfügt im Bereich beider Stirnflächen 6, 7 über wellenförmig ausgebildete Profile 8, 9.

Der Dichtkörper 1' gem. Figur 1b beinhaltet einen ebenfalls metallischen Grundkörper 10, auf welchen im Bereich beider Stirnflächen 11, 12 Dichtlippen bildende Wülste 13, 14 aufgespritzt sind. Auch hier soll ein im Querschnitt zylindrischer Dichtkörper, jedoch ohne Ausnehmungen, vorliegen.

Figur 1c zeigt einen aus Silikon bestehenden Dichtkörper 1", der einen Ansatz 15 aufweist, über welchen er in einer nicht weiter dargestellten Nut eines ebenfalls nicht weiter dargestellten Aufnahmekörpers einbringbar ist. Im Dichtbereich 16 sind Dichtlippen bildende Wülste 17 angeformt.

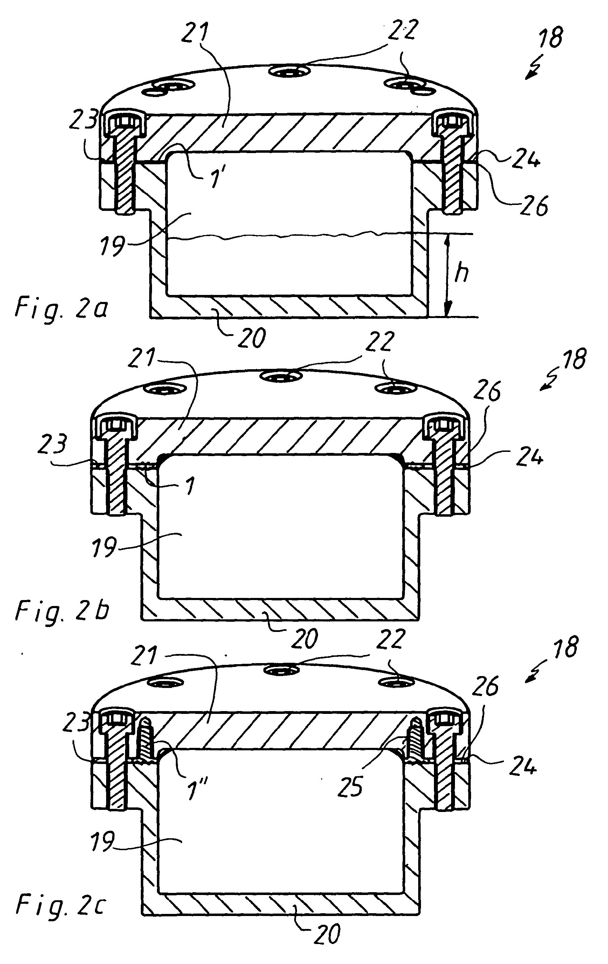

Die Figuren 2a bis 2c zeigen die erfindungsgemäße Einrichtung 18, die aus gleichen Bauteilen zusammengesetzt ist, nämlich einem mit einer Ausnehmung 19 versehen Gefäß 20 sowie einem zugehörigen, die Ausnehmung 19 vollständig verschließenden Deckel 21. Die Verbindung zwischen Gefäß 20 und Deckel 21 erfolgt über eingelassene Inbusschrauben 22. Der jeweilige Dichtkörper 1, 1', 1" ist außerhalb der Ausnehmung 19 im Bereich einander gegenüberliegender Stirnflächen 23, 24 einerseits des Gefäßes 20 und andererseits des Deckels 21 eingebracht. In diesem Beispiel sind die Stirnflächen 23, 24, gem. Figur 2a plan ausgebildet. Gleiches gilt für die Stirnflächen 23, 24, gem. Figur 2b. Die jeweiligen Oberflächen entsprechen denjenigen im tatsächlichen Einbauzustand des jeweiligen Dichtkörpers 1, 1'.

Zur Aufnahme des Dichtkörpers 1' gem. Figur 2 ist deckelseitig eine umlaufende Nut 25 vorgesehen, in welche der Ansatz 15 des Dichtkörpers 1" eingeknüpft ist. Die weiteren Flächenteile der Stirnfläche 24 sowie der gesamte Bereich der Stirnfläche 23 sind ebenfalls plan ausgebildet, wobei die Oberfläche der jeweiligen Stirnfläche 23, 24 ebenfalls realitätsnah ausgebildet ist.

Durch entsprechendes Anziehen der Schrauben 22 wird der jeweilige Dichtkörper 1,1' oder 1" in entsprechender Weise elastisch verformt, wobei zwischen dem Gefäß 20 und dem Deckel 21 ein durch die verbleibende Materialdicke des Dichtkörpers 1, 1', 1" bedingter Dichtspalt 26 verbleibt, der in Abhängigkeit von der Vorspannkraft unterschiedliche Höhen aufweisen kann. In der Ausnehmung 19 befindet sich ein Prüfmedium, in diesem Beispiel ein Normalkraftstoffgemisch, das bis zu Höhe h innerhalb des Gefäßes 20 vorgesehen ist. Da - abweichend vom Stand der Technik - keine Proben mit nur geringer Dicke, sondern dem Betriebszustand entsprechend hergestellte Dichtkörper 1, 1 oder 1" zum Einsatz gelangen, wird das Prüfmedium - da es nicht nach oben ausweichen kann - durch den Dichtspalt 26, respektive den dort vorgesehenen Dichtkörper 1,1' oder 1", hindurchtreten. Somit wird eine den realen Einsatzbedingungen des jeweiligen Dichtkörpers 1, 1', 1" entsprechende Untersuchung der Permeation eines Prüfmediums bereit gestellt, die auch Rückschlüsse auf neu zu entwickelnde Dichtsysteme erlaubt. Die Einrichtung 18 kann bedarfsweise in einem Temperaturschrank vorgesehen werden, so dass auch hier reale Einsatzbedingungen, wie sie beispielsweise in einer Brennkraftmaschine oder einem Abgassystem gegeben sind, simulierbar sind.

Da der jeweilige Dichtkörper 1, 1', 1" vollständig zwischen den Stirnflächen 23, 24 eingespannt ist, sind Bauteile, wie Stützsiebe oder dergleichen, entbehrlich.

## Patentansprüche

1. Einrichtung zur Prüfung der Durchlässigkeit von Flüssigkeiten und/oder Dämpfen durch elastomere Dichtkörper (1, 1' 1"), beinhaltend ein mit einer Ausnehmung (19) versehenes Gefäß (20) zur Aufnahme eines Prüfmediums sowie einen die Ausnehmung (19) verschließenden Deckel (21), der mittels Schrauben (22) gegenüber dem Gefäß (20) festlegbar ist, wobei der Dichtkörper (1, 1', 1") zwischen gegenüberliegenden Stirnflächen (23, 24) einerseits des Gefäßes (20) und andererseits des Deckels (21) positionierbar, über die Schrauben (22) mit vorgebbarer Spannkraft fixierbar und das durch die verbleibende Materialdicke des Dichtkörpers (1, 1', 1") durch einen Dichtspalt (26) zwischen den Stirnflächen (23, 24) nach außen tretende Prüfmedium messbar ist.

2. Einrichtung nach Anspruch 1, **dadurch gekennzeichnet**, das zumindest eine Stirnfläche (23, 24) mit nicht planer Kontur ausgebildet ist.

3. Einrichtung nach Anspruch 1 oder 2, **dadurch gekennzeichnet, dass** zumindest eine Stirnfläche (24) eine der Einbausituation im Betriebszustand des Dichtkörpers (1") entsprechende Nut (25) aufweist.

4. Einrichtung nach einem der Ansprüche 1 bis 3, **dadurch gekennzeichnet, dass** die Schrauben (22) durch Innensechskantschrauben gebildet sind, die im gespannten Zustand des Dichtkörpers (1, 1', 1") maximal mit der äußeren Begrenzungskante des Deckels (21) abschließen.

5. Einrichtung nach einem der Ansprüche 1 bis 4, **dadurch gekennzeichnet, dass** die Prüfung der Durchlässigkeit von Flüssigkeit und/oder Dampf und/oder Gase durch den Dichtspalt (26) durch qualitative Messung des Gewichtsverlustes des Prüfmediums herbeiführbar ist.

6. Einrichtung nach einem der Ansprüche 1 bis 5, **dadurch gekennzeichnet, dass** die Oberfläche der jeweiligen Stirnfläche (23, 24) insbesondere hinsichtlich Kontur und Rauigkeit, derjenigen der im Einbauszustand des Dichtkörpers (1, 1', 1") eingesetzten Stirnfläche entspricht.

7. Einrichtung nach einem der Ansprüche 1 bis 6, **dadurch gekennzeichnet, dass** das Gefäß (20) und/oder der Deckel (21) aus Aluminium besteht.

8. Einrichtung nach einem der Ansprüche 1 bis 7, **dadurch gekennzeichnet, dass** das Gefäß (20) und/oder der Deckel (21) aus Kunststoff besteht.

9. Einrichtung nach einem der Ansprüche 1 bis 8, **gekennzeichnet durch** ein im Querschnitt zylindrisch ausgebildetes Gefäß (20) sowie einen ebenfalls zylindrisch ausgebildeten Deckel (21).

10. Einrichtung nach einem der Ansprüche 1 bis 9, **dadurch gekennzeichnet, dass** die Prüfung der Durchlässigkeit von Flüssigkeit und/oder Dampf und/oder Gase unter Temperatureinfluss erfolgt.
